(19) Europäisches Patentamt
European Patent Office
Office européen des brevets

(11) Publication number: 0 324 716
A2

(12) # EUROPEAN PATENT APPLICATION

(21) Application number: 89810001.1

(22) Date of filing: 03.01.89

(51) Int. Cl.[4]: C 07 F 9/12
C 08 K 5/52
//(C08K5/52,5:53,5:09)

(30) Priority: 12.01.88 GB 8800582
30.06.88 GB 8815628

(43) Date of publication of application:
19.07.89 Bulletin 89/29

(84) Designated Contracting States:
BE DE FR GB IT NL

(71) Applicant: CIBA-GEIGY AG
Klybeckstrasse 141
CH-4002 Basel (CH)

(72) Inventor: Holt, Brian, Dr.
70 Moss Park Road Stretford
Manchester M32 9HQ (GB)

(54) **Triaryl phosphates.**

(57) The invention provides a triaryl phosphate which is produced by contacting phenol with an isopropylating agent to produce an isopropylated phenol having 5 to 65% by weight of isopropyl moieties based on the weight of phenol moiety, mixing the isopropylated phenol with a para-alkyl phenol, wherein the alkyl group is t-butyl or a $C_5$ to $C_{12}$ alkyl group, in a ratio by weight of 10:1 to 1:10, and phosphorylating the mixture of phenols. The product is useful as a flame retardant additive for polymers.

EP 0 324 716 A2

## Description

# Triaryl Phosphates

The present invention relates to novel triaryl phosphates their production and their use as flame retardant additives for polymers.

Stress cracking is a phenomenon which can occur in injection moulded polymers containing triaryl phosphates as flame retardants. One type of polymer suffering from this problem is the polyphenylene oxide type, especially blends of polyphenylene oxide with high impact polystyrene such as those sold under the Trade Name Noryl.

Under certain moulding conditions it is possible for the flame retardant, or components of it as triaryl phosphates are usually complex mixtures, to volatilise and then condense on the injection mould to give a liquid film. This is termed "juicing". A build-up of this liquid film can lead to stress cracking occurring at points on the moulding where there is particularly high stress concentration.

We have now produced a triaryl phosphate which reduces or even eliminates the occurrence of stress cracking.

Accordingly the present invention provides a triaryl phosphate which is produced by contacting phenol with an isopropylating agent to produce an isopropylated phenol having 5 to 65% by weight of isopropyl moieties based on the weight of phenol moiety, mixing the isopropylated phenol with a para-alkyl phenol, wherein the alkyl group is t-butyl or a $C_5$ to $C_{12}$ alkyl group, in a ratio by weight of 10:1 to 1:10, and phosphorylating the mixture of phenols.

The isopropylated phenol may be produced in conventional Friedel Crafts manner using a suitable isopropylating agent such as propylene. The reaction may be carried out at an elevated temperature e.g. about 140°C in the presence of a Friedel Crafts catalyst or acid earth catalyst. For a fuller description of the alkylation, see GB 1146173.

The para-alkyl phenol may be, e.g. para-t-butyl phenol, para-t-amyl phenol, para-nonyl phenol or para-dodecyl phenol, but is preferably para-t-butyl phenol.

The isopropylated phenol is then mixed with para-alkyl phenol in a ratio by weight of 10:1 to 1:10, preferably 5:1 to 1:5, and the mixture is phosphylated. The phenols are reacted with a phosphorylating agent such as phosphorus oxychloride or phosphorus pentachloride. The reaction may be carried out using a catalyst such as aluminium chloride or magnesium chloride or in the presence of a base, such as pyridine. The reaction is preferably carried out at a temperature from 15° to 250°C, but preferably from 100° to 225°.

The resulting product is a complex mixture of phosphates which does not lead to juicing in injection moulding.

The phosphates of the present invention are suitable flame retardant additives for various polymers. Examples of the polymers which may be made flame retardant by addition of compounds of the invention are:

polystyrene, polyethylene, polypropylene, polyvinyl acetate, polyphenylene oxide or a blend thereof with polystyrene, especially high impact polystyrene, acrylonitrile/butadiene/styrene copolymes, cellulose, polyestes, polycarbonates, rubbers, phenol formaldehyde resins, epoxy resins, polyester resins, amino formaldehyde resins, polyamides or copolymers and poly blends of the aforementioned polymers and resins. Examples of poly blends are polystyrene/poly-2,6-dimethyl-1,4-phenylene oxide, especially high impact polystyrene/poly 2,6-dimethyl-1,4-phenylene oxide, and polycarbonate/ABS.

The amounts of triaryl phosphate per hundred parts of polymer that may be employed are from 1 to 100 parts, preferably 2 to 35 parts and most preferably 5 to 15 parts by weight. The amounts of phosphate used will vary depending on the actual polymers, the degree of flame retardancy required and the type of other ingredients which may be present.

The phosphates of the present invention may be used in conjunction with other flame retardants. In particular they may be used together with at least one metal or metalloid salt of a phosphonic acid of the general formula I

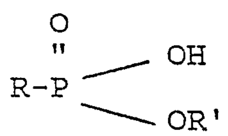

(I)

in which R is a straight or branched chain alkyl group having 1 to 3 carbon atoms optionally substituted by one or more halogen atoms or hydroxyl groups; and R′ is H or an alkyl group having 1 to 3 carbon atoms and wherein the metal or metalloid is selected from Groups IIA, IIB, IIIA, IVA and VA of the "Periodic" Chart of Elements (Fisher Scientific Company c 1968).

These phosphonic acid salts are described in European Patent Application No. 0245207.

The phosphates may be used with the phosphonic acid salts and also a mono- or poly-carboxylic acid or a metal or metalloid salt thereof, the metal or metalloid being selected from Groups I, IIA, IIB, IIIA, IVA and VA of the Periodic Chart of Elements (above).

If a monocarboxylic acid, or salt, is used, the acid may contain from 4 to 30 C atoms and may be a linear or branched alkyl, aralkyl or aryl carboxylic acid. Examples of such acids are butanoic, hexanoic, 2-ethylhexanoic, octanoic, decanoic, dodecanoic, stearic, phenylacetic, benzoic and naphthoic acids.

Examples of polycarboxylic acid include succinic, maleic, adipic, pimelic, sebacic, phthalic acids, citric acid, pyromellitic acid and polycarboxylic acids prepared by polymerisation of one or more unsaturated mono- or di- carboxylic acids such as acrylic,

methacrylic, maleic or itaconic acid or optionally by copolymerisation of one or more of these unsaturated carboxylic acids with an olefin such as ethylene, propylene, vinyl acetate or styrene.

Examples of these polycarboxylic acids include polyacrylic acid, polymaleic acid, copolymers of ethylene and acrylic acid, copolymers of maleic acid and styrene, and copolymers of maleic acid with vinyl acetate and/or ethyl acrylate.

Where the carboxylic acids are used in the form of their metal or metalloid salts, suitable cations include lithium, magnesium, calcium, barium, zinc, boron, aluminium, tin or antimony.

When a metal or metalloid salt of a polycarboxylic acid is used, the carboxylic acid groups may be fully or only partially neutralised i.e. some free COOH groups may be present along with the $COO^-$ groups.

The amount of phosphate, phosphonic acid salt and/or carboxylic acid salt used may vary over a wide range depending on the balance of properties required in the polymer-flame retardancy, impact strength, processing conditions etc. The amounts needed can be easily determined by simple experiment.

The compositions of the invention may also contain other conventional ingredients, such as heat stabilisers, light stabilisers, ultra-violet light absorbers, anti-oxidants, anti-static agents, preservatives, adhesion promoters, fillers, pigments, lubricants, blowing agents, fungicides, processing aids and smoke suppressants.

The invention is illustrated by the following Examples, in which the isopropylated phenol is prepared by reacting phenol with propylene at about 140°C in the presence of an acid earth catalyst.

Example 1

553.8 parts of p-t-butyl phenol (3.692 moles, M.W. = 150), 496.2 parts of an isopropylated phenol mixture (3.776 moles, M.W. = 131.4) and 0.77 parts of aluminium chloride are charged to a reactor fitted with a stirrer, contact thermometer, dropping funnel and reflux condensor. To this mixture which is heated to 105°C, is added 373.3 parts of phosphorus oxychloride (2.43 moles, M.W. = 153.5) at a uniform rate over a period of two and half hours. During this addition the temperature is raised from 105° to 115°C. The phosphorus oxychloride is added below the surface of the phenolic mixture.

Hydrogen chloride gas evolved during the reaction is absorbed in water and the resultant hydrochloric acid solution is titrated with sodium hydroxide solution. At the end of the phosphorus oxychloride addition the temperature is raised to 200°C during two and quarter hours and there held at 200°C for one hour to complete the reaction.

The last traces of hydrogen chloride gas are removed under reduced pressure to yield 1149.9 parts of crude phosphate.

The phosphate is distilled under reduced pressure to yeild:

63.7 parts of recovered alkylated phenols b.p. 110°-226°C at 2.1 mbar

1071.3 parts of a complex phosphate ester b.p. 266° 272°C at 2.3 mbar

11.6 parts of resiude.

The complex phosphate ester had the following physical properties

| | |
|---|---|
| Viscosity at 40°C ($mm^2/s$) | 193 |
| Neutralisation number (mg $KOHg^{-1}$) | 0.09 |
| S.G. at 20/20°C | 1.097 |
| R.I. at 25°C | 1.5367 |
| Colour (hazen) | 75 |

Example 2

A phosphate is prepared according to the procedure described in Example 1 except that 286.6 parts of p-t-butyl phenol (1.911 moles, M.W. = 150) and 413.4 parts of an isopropylated phenol mixture (3.146 moles, M.W. = 131.4) are phosphorylated with 243.3 parts of phosphorus oxychloride (1.585 moles, M.W. = 153.5).

The 766.8 parts of crude phosphate prepared are distilled under reduced pressure to yield:

60.9 parts of recovered alkylated phenols b.p. 98°-254°C at 2.0 mbar

679.3 parts of a complex phosphate ester b.p. 254°-282°C at 2.3 mbar

15.2 parts of residue.

Example 3

A phosphate is prepared according to the procedure described in Example 1 except that 583 parts of p-t-butyl phenol (3.887 moles, M.W. - 150) and 117 parts of an isopropylated phenol mixture (0.89 moles, M.W. = 131.4) are phosphorylated with 242.1 parts of phosphorus oxychloride (1.577 moles, M.W. = 153.5).

The 764.7 parts of crude phosphate prepared are distilled under reduced pressure to yield:

11.0 parts of recovered alkylated phenols b.p. 91°-276°C at 2.1 mbar

711.0 parts of a complex phosphate ester b.p. 276°-286°C at 2.0 mbar

9.3 parts of residue.

Example 4

A phosphate is prepared according to the procedure described in Example 1 except that 117 parts of p-t-butyl phenol (0.78 moles, M.W. - 150) and 583 parts of an isopropylated phenol mixture (4.437 moles, M.W. = 131.4) are phosphylated with 245.9 parts of phosphorus oxychloride (1.602 moles, M.W. = 153.5).

The 766.4 parts of crude phosphate prepared are distilled under reduced pressure to yield:

91.5 parts of recovered alkylated phenols b.p. 94°-236°C at 2.0 mbar

646.3 parts of a complex phosphate ester b.p. 236°-269°C at 1.9 mbar

20.0 parts of residue.

Example 5

354.8 parts of p-t-butyl phenol (2.36 moles, M.W. = 150) and 0.51 parts of aluminium chloride

are charged to a reactor fitted with a stirrer, contact thermometer, dropping funnel and reflux condensor. To this mixture which is heated to 105°C, is added 121.0 parts of phosphorus oxychloride (0.79 moles, M.W. = 153.5) at a uniform rate over a period of one and quarter hours. During this addition the temperature is raised from 105° to 110°C. The phosphorus oxychloride is added below the surface to the p-t-butyl phenol. At the end of the addition the reaction temperature is lowered to 82°C and 345.2 parts of an isopropylated phenol mixture (2.66 moles, M.W. = 129.7) are charged to the reactor.

To this mixture which is heated to 110°C, is added 125.3 parts of phosphorus oxychloride (0.82 moles, M.W. = 153.5) at a uniform rate over one hour. During this addition the temperature is raised from 110° to 115°C. The phosphorus oxychloride is added below the surface of the reaction mass.

Hydrogen chloride gas evolved during the reaction is absorbed in water and the resultant hydrochloric acid solution is titrated with sodium hydroxide solution. At the end of the addition of all the phosphorus oxychloride the temperature is raised to 200°C during two and quarter hours and then held at 200°C for one hour to complete the reaction.

The last traces of hydrogen chloride gas are removed under reduced pressure to yield 763.1 parts of crude phosphate.

The phosphate is distilled under reduced pressure to yield:

41.9 parts of recovered alkylated phenols b.p. 92°-244°C at 2.0 mbar

688.2 parts of a complex phosphate ester b.p. 244°-285°C at 2.0 mbar

11.9 parts of residue.

Example 6

191.9 parts of p-t-amyl phenol (1.17 moles, M.W. = 164), 177.4 parts of an isopropylated phenol mixture (1.35 moles, M.W. 131.4) and 0.27 parts magnesium chloride are charged to a reactor fitted with a stirrer, contact thermometer, dropping funnel and reflux condenser. To this mixture, which is heated to 140°C, is added 124.4 parts of phosphorus oxychloride (0.81 moles, M.W. = 153.5) at a uniform rate over a period of two hours. During the addition the temperature is raised to 150°C. The reaction mass is heated to 200°C progressively over 2.75 hours and is heated for a further hour at 200°C. The mixture is degassed using a water pump vacuum (about 40 mbar) at 200°C until the chlorine content is about 0.02%.

The phosphate is distilled using an oil pump vacuum at 2.66 mbar producing a main fraction of mixed phosphates boiling at 260°C.

Example 7

Example 6 is repeated using 257.4 parts p-nonyl phenol (1.17 moles, M.W.=220) in place of the p-t-amyl phenol and using 0.37 parts magnesium chloride. The product is recovered in the same way.

Example 8

The stress cracking properties of the phosphate of Examples 1, 6 and 7 are assessed by the following laboratory test method. An injection moulded bar of polyphenylene oxide/high impact polystyrene alloy, sold under the Trade Name Noryl, is deliberately stressed by bending in a jig, and a film of the phosphate is painted on the point of highest stress. The jig gives a maximum stress of 1%. The time taken to the appearance of the first crack and the time to breaking is recorded. The results are as follows:-

The phosphate of Example 1 showed no cracks after 96 hours; the phosphate of Example 6 showed the first crack after 25 hours and had not broken after 33 hours; and the phosphate of Example 7 did not crack for over 28 hours.

**Claims**

1. A triaryl phosphate which is produced by contacting phenol with an isopropylating agent to produce an isopropylated phenol having 5 to 65% by weight of isopropyl moieties based on the weight of phenol moiety, mixing the isopropylated phenol with a para-alkyl phenol, wherein the alkyl group is t-butyl or a $C_5$ to $C_{12}$ alkyl group in a ratio by weight of 10:1 to 1:10, and phosphorylating the mixture of phenols.

2. A triaryl phosphate as claimed in claim 1 in which the ratio of isopropylated phenol to para-alkyl phenol is from 5:1 to 1:5.

3. A triaryl phosphate as claimed in claim 1, in which the para-alkyl phenol is p-t-butyl phenol, p-t-amyl phenol or p-nonyl phenol.

4. A composition comprising a polymer and, as flame retardant additive 1 to 100 parts per hundred parts of polymer of a triaryl phosphate as claimed in claim 1.

5. A composition as claimed in claim 4 in which the amount of phosphate is 2 to 35 parts per hundred parts of polymer.

6. A composition as claimed in claim 5 in which the amount of phosphate is 5 to 15 parts per hundred parts of polymer.

7. A composition as claimed in claim 4 in which the polymer is a polyphenylene oxide or a blend thereof with high impact polystyrene.

8. A composition as claimed in claim 4 in which the polymer is a polycarbonate/ABS blend.

9. A composition as claimed in claim 4 which also contains at least one metal or metalloid salt of a phosphonic acid of the general formula I

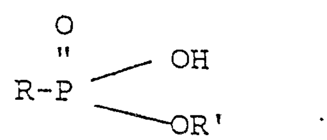

(I)

in which R is a straight or branched chain alkyl group having 1 to 3 carbon atoms optionally substituted by one or more halogen atoms or

hydroxyl groups; and R′ is H or an alkyl group having 1 to 3 carbon atoms and wherein the metal or metalloid is selected from Groups IIA, IIB, IIIA, IVA and VA of the "Periodic" Chart of Elements (Fisher Scientific Company c 1968).

10. A composition as claimed in claim 4 which also contains a mono- or poly-carboxylic acid or a metal or metalloid salt thereof, the metal or metalloid being selected from Groups I, IIA, IIB, IIIA, IVA and VA of the Periodic Chart of Elements (above).